# EUROPEAN PATENT SPECIFICATION

(11) **EP 1 472 066 B1**
(45) Date of publication and mention of the grant of the patent: **17.01.2007**
(21) Application number: 02702709.3
(22) Date of filing: 06.02.2002
(51) Int. Cl.: B29C 45/26, B29C 33/30

(54) **MOULD AND METHOD FOR PRODUCING TV FRAMES**
SPRITZGIESSWERKZEUG UND VERFAHREN ZUR HERSTELLUNG VON BILDSCHIRMRAHMEN
MOULE ET PROCEDE POUR PRODUIRE DES CHASSIS DE TV

(43) Date of publication of application: 03.11.2004
(73) Proprietor: B.M. Industria Bergamasca Mobili S.P.A., 24060 Bagnatica (IT)
(72) Inventor: SCOTTI, Luca, I-20040 Aicurzio (IT)
(74) Representative: Trupiano, Federica
(86) International application number: PCT/IT2002/000071
(87) International publication number: WO 2003/066308

(56) References cited:
- US-A- 5 387 096
- US-A- 6 039 912
- PATENT ABSTRACTS OF JAPAN vol. 018, no. 054 (M-1549), 27 January 1994 (1994-01-27) -& JP 05 278081 A (FUNAI ELECTRIC CO LTD), 26 October 1993 (1993-10-26)
- PATENT ABSTRACTS OF JAPAN vol. 014, no. 159 (M-0956), 28 March 1990 (1990-03-28) -& JP 02 022015 A (HITACHI LTD), 24 January 1990 (1990-01-24)

## Description

### TECHNICAL FIELD

The present invention relates to a mold for plastic materials; more particularly, a mold for the front and rear frames of television sets, monitors, displays products.

### BACKGROUND ART

The supporting frame for displays and the rear frame which, upon assembly thereof, form the external cabinet of the display, are produced by molding plastic materials. The molding of each frame requires a suitable mold as in the sector of television sets, monitors, displays, even small variations in size and model correspond to different products. At present, in fact, in order to realize, for instance, a television set having a 19" screen, a mold is necessary that will be different from the mold utilized to realize a TV set with a 21" screen. Therefore, in the sector of TV sets, monitors, displays many molds must be used, at least as many as the models having different screen sizes that are produced. Another very important aspect lies in that the form of the printed part cannot be changed unless the whole mold is replaced, which obviously involves economic problems.

On the other hand, in the sector of television sets, monitors, displays, while the electronic elements which are at the basis of their working remain substantially equivalent for long periods of time and, even when they are updated, they do not usually involve corresponding modifications to the external shape and size of the finished product, the shapes (external aspects) of the products undergo frequent modifications due to requirements of space optimization and new conceptions of the product, and also as function of the trends in said sectors. Another problem is represented by the necessity of realizing different models that, the sizes being equal, have a variable location of the push button panel and/or the areas intended for housing possible loudspeakers or operation and/or adjustment devices that are usually located on the screen supporting frame. In this case, in order to prevent the replacement of the mold, the attempt has been at solving the problem by means of suitable "templates", but the result has not always been satisfactory, and besides this system only allows to perform extremely limited variations.

It is therefore evident that the production of these frame elements is very expensive, requires very high initial investments, and besides it does not allow any changes in the models produced. The situation appears to be even more critical as generally the cabinet models undergo a very rapid aging. Their working life lasts about two years, after which it is necessary to redesign the cabinet form to keep up with the taste of the final user.

US-A-5387096 discloses a mold for cabinet frames of TV sets. The mold is provided with modular inserts which can be fastened to the mold by way of screws to define the shape and/or the dimensions of the part to be molded. The screw is lodged in a channel provided within the respective insert and can be accessed by a screwdriver. The channel opening is closed by the screw head or by another opposed insert of the same type.

JP-A-5278081 discloses a mold for cabinet frames of TV sets. Inserts can be inserted into the mold in order to change the shape of the part to be molded without changing the same mold. The inserts can be simply lodged within the mold with no need for fasteners.

### DISCLOSURE OF THE INVENTION

Object of the present invention is to solve the aforesaid drawbacks, providing a mold for front and rear frames of TV sets, monitors and displays, such as to allow to produce frames having different size and/or lines, and such as to be also of easy and intuitive use.

Another object of the present invention is to provide a mold such as to allow to extend the working life of said mold, surviving the subsequent product restylings.

Still a further object of the present invention is to provide a mold allowing to change, even to a significant extent, the location of the areas intended for housing the working and/or adjustment accessories or devices usually located on the screen supporting frame, or possibly on the rear frame of the cabinet.

The above objects and additional advantages are achieved by means of the mold of claim 1 and the method of claim 9. The present invention relates to a mold for cabinet frames of television sets, monitors, and displays comprising at least a basic mold element and at least a basic counter-mold element that define a cavity. The mold comprises one or more modular inserts/elements at least partly shaped that fill up said cavity movably, to modify the shape and/or size of the part to be molded. In particular, said basic mold element and said basic counter-mold element are completed through the association with one or more of said mold modular element, obtaining thereby one only modular mold that allows the realization of molded parts of different shapes and/or dimensions depending on the shapes of said individual elements to be associated to said basic elements. In this way it is possible to produce with one only mold, frames of different size and/or forms by simply changing the modular inserts/elements. In this way, the investment and production costs reduce, both because it is possible to produce with one only mold frames having different models and size, and because at the end of the product life, which as mentioned above is equal to about two years, the mold can be partly re-utilized through the realization of new and suitable modular inserts, and used for the production of a new product that represents the aesthetic and/or functional evolution of the previous model. As a consequence, there reduces also the time between the design and the marketing of a new product that represents the aesthetic and/or functional evolution of the previous one, achieving, among other results, a strong competition advantage with respect to firms that base their production on construction/utilization methods of traditional molds and molding processes.

According to a preferred embodiment of the present invention, the modular inserts comprise at least a shaped portion which reproduces, as opposite, at least a portion of the part to be molded, such that the assembly of the necessary movable modular elements defines the part to be molded completely.

According to another preferred embodiment of the present invention, the modular inserts comprise portions for coupling with corresponding portion of the basic mold element and/or the basic counter-mold element and/or the other possible modular inserts.

According to an advantageous aspect of the present invention, the modular inserts/elements comprise fasteners for their fastening to each other and/or for their fastening to the basic mold element and/or the basic counter-mold element.

Further characteristics and advantages of the present invention will be clearer thanks to the following description reported by way of non limiting example, with reference to the attached drawings, wherein:

### BRIEF DESCRIPTION OF DRAWINGS

- Figure 1 is a front view of a product realizable with the mold according to the present invention;
- Figure 2a is a cross-section view of a mold according to the present invention, with the modular inserts in exploded configuration;
- Figure 2b is a longitudinal section view of the mold of Figure 2a, with the modular inserts in exploded configuration;
- Figure 3a is a cross-section view of an alternative mold according to the present invention, with the modular inserts in exploded configuration;
- Figure 3b is a longitudinal section view of the mold of Figure 3a, with the modular elements in exploded configuration.

### BEST MODE FOR CARRYING OUT THE INVENTION

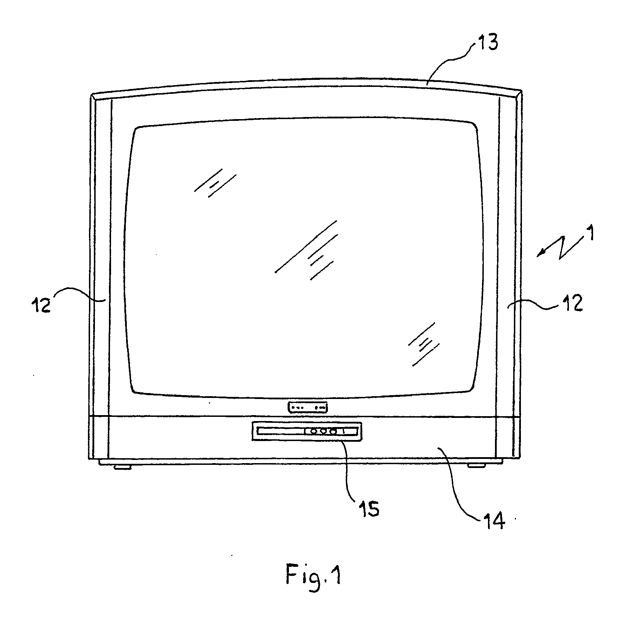

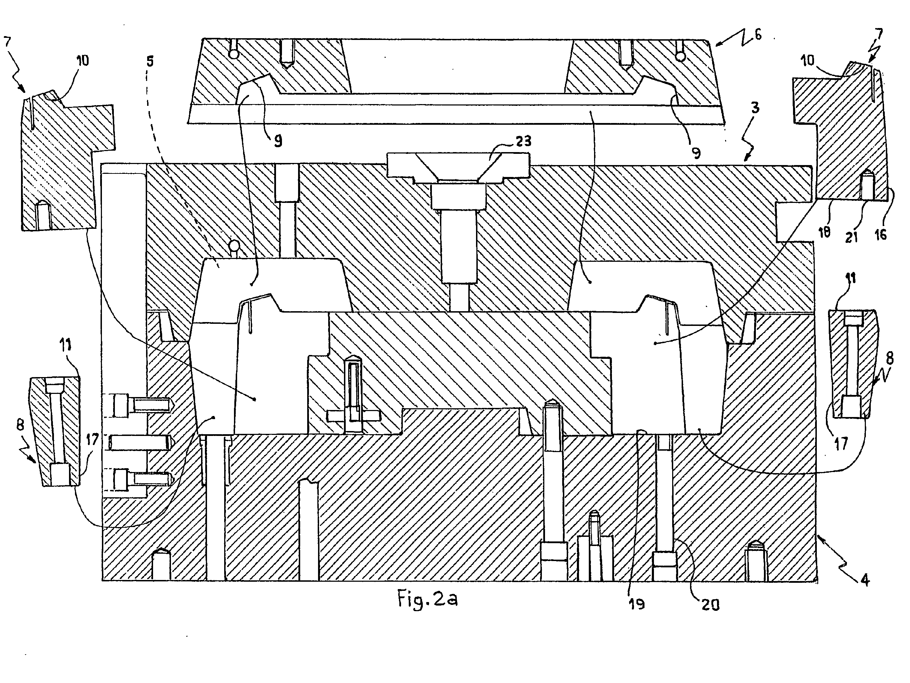

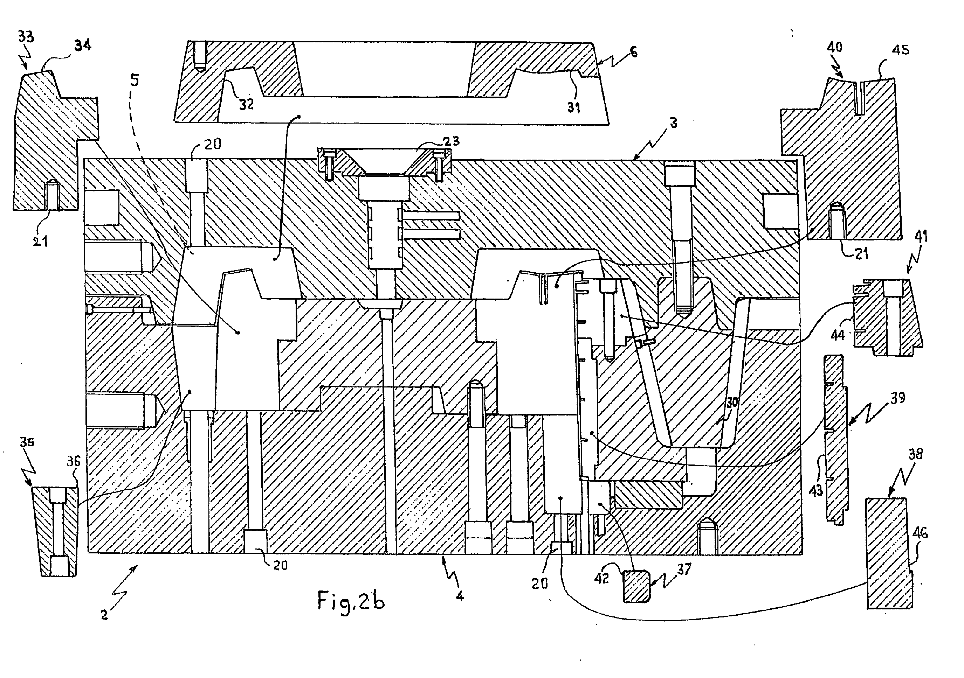

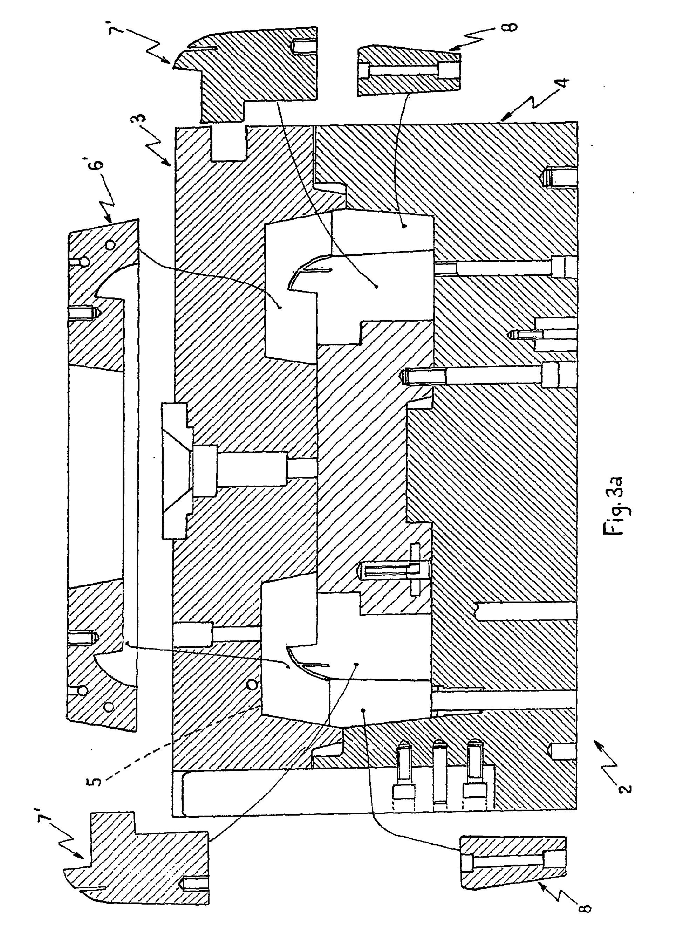

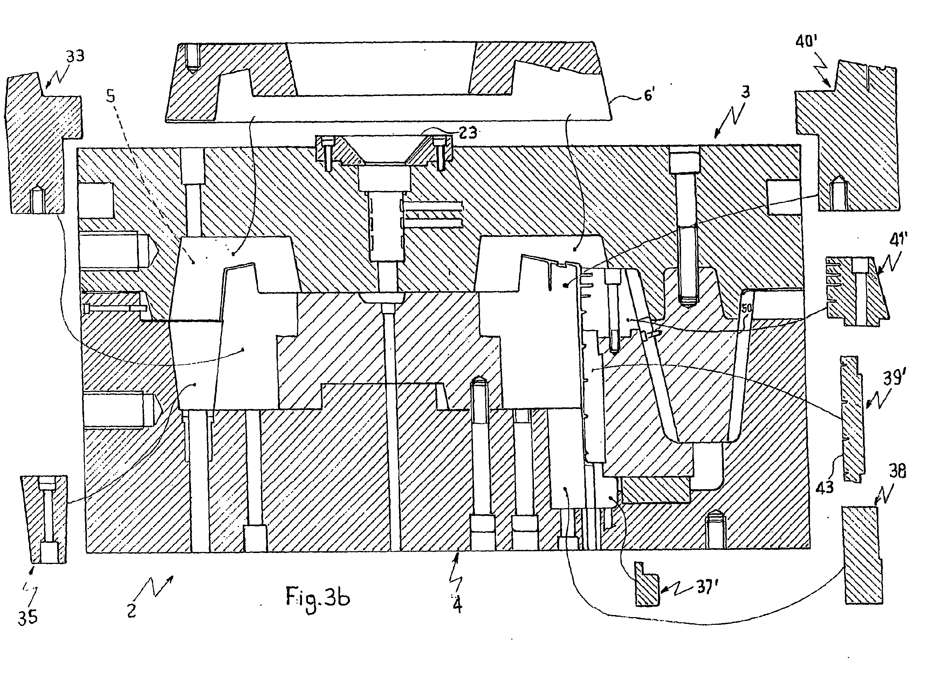

Figure 1 shows, by way of example, a product, and in particular the front portion of a frame 1 for TV sets, realizable with a mold 2 according to the present invention. With reference to Figures 2, 3, a mold 2 according to the invention comprises a basic element of a fixed mold 3 an a basic element of mobile counter-mold element 4 that define a cavity 5 represented in Figures 2 and 3 by the area filled up by the movable modular elements. Said cavity 5 is filled up, for instance, by the shaped modular inserts 6, 7, 8 of Figure 2a, suitable to define at least partly the part to be molded 1.

In the present description by the term "cavity" there is not intended to indicate - as in the usual molds - only the molding cavity realized in the basic mold element and/or the basic counter-mold element, that reproduces entirely or partly, as the negative, the product to be molded, but also the cavity filled up by the modular shaped inserts, which in this case reproduce entirely or partly through their shaped portion as the negative, the product to be molded.

In the preferred embodiment of Figures 2a, 2b, and 3a, 3b, the modular shaped inserts/elements entirely define by coupling with each other the part to be molded. As can be seen, for instance in Figure 2a, each modular insert 6, 7, 8 comprises a shaped portion that reproduces, at least partly, as the negative a portion of part 1. The modular insert 6, for instance, always as can be seen in Figure 2a, defines through the shaped portion 9 the external profile of uprights 12 of the TV set frame. The modular insert 7 defines through the shaped portion 10, the internal thickness of the profile of uprights 12 of the TV set frame 1, and the modular insert 8 defines through the shaped portion 11 the external thickness of the profile of uprights 12. Both transversal frame portions, and in particular the upper transversal portion 13 and the lower portion 14 provided with the push-button panel 15, are defined by the coupling of the further modular inserts shown in Figure 2b. In particular, the modular insert 6, shown in longitudinal section in Figure 2b, defines, with the shaped portion 31, the external profile of the transversal lower portion 14 of the TV frame, and defines, with the shaped portion 32, the external profile of the transversal upper portion 13. The modular insert 33, also shown in Figure 2b, defines, with the shaped portion 34, the internal profile of the transversal upper portion 13 of the TV frame 1, while the modular insert 35 defines with the shaped portion 36 the external thickness of portion 13. The base of the TV frame 1 it obtained by respectively coupling the modular inserts 37, 38, 39, 40, 41. In particular, as can be seen in Figure 2b, the modular inserts 37, 39, 41 define with their respective shaped portions 42, 43, 44 the external profile of the base, while the modular inserts 38, 40 define with their shaped portions 46, 45, the internal profile of the base of the TV cabinet.

Therefore, as mentioned above, the coupling of the modular inserts within cavity 5 determines entirely, in the case in point shown in the attached drawings, the part to be molded 1, that is, the negative shape of the part is reproduced entirely by the coupling of the modular inserts while no portion of the part profile is reproduced by the internal surface of cavity 5. In this case, therefore, the cavity defined by the basic mold and counter-mold elements is only intended for acting as a support element for the modular inserts. Alternatively, without falling outside the protection scope of the present invention, it is possible to realize the profile of part 1 to be molded partly with the shaped portions of the modular inserts and partly by exploiting the shape of the internal surface of cavity 5.

The remaining surfaces of the modular inserts form as many coupling portions that allow the coupling of the modular inserts with each other or the coupling of the modular inserts with the internal surfaces of cavity 5 obtained in the basic mold element 3 and the basic counter-mold 4.

By way of example, the coupling portion 16 of the modular insert 6 is so designed as to match perfectly portion 17 of the modular insert 8; while the coupling portion 18 is so designed as to match perfectly the lower surface 19 of cavity 5. The corresponding coupling portions, such as portions 16, 17 or portions 18, 19, realize a perfect sealing-coupling of the parts, preventing thereby the formation of the typical molding burrs.

Each modular insert is locked, when it fills up cavity 5, in correspondence of a coupling portion by means of known fasteners, such as pins, pegs of threaded screws 20, that are housed in special seats 21 obtained in the modular inserts. Advantageously, each modular insert is individually locked when it occupies cavity 5, to allow also the removal of one only modular insert from said cavity. In this way it is even simpler to remove the modular inserts, and in particular only those that define the frame part to be modified, and to replace them with further inserts/elements that allow precisely to make changes in the shape of the part to be molded and/or its size. For instance, as shown in Figure 3a, it suffices to replace the modular inserts 6 respectively 7 with the modular inserts 6', 7', while keeping the modular insert 8 unchanged, to change entirely the shapes and the external lines of uprights 12 of the front frame 12 of the TV set to be molded. In particular, uprights will be obtained that have a more crowned shape and that are devoid of sharp angles. Figure 3b shows the longitudinal section view of the mold of Figure 3a. As is evident, in such mold, changing the modular inserts 40, 6, 41, 39, 37 (shown in Figure 2b) respectively with the modular inserts 40', 6', 41', 39', 37', keeping modules 33, 35, 38 unchanged, was sufficient to completely modify the shape of the transversal element 14 of the TV set frame entirely.

Figures 2b, 3b show an auxiliary movable element 50 of the basic mold element 3, having a countersunk profile and allowing, with an open mold and upon removal therefrom, an easier insertion or removal of the modular inserts during the mold preparation operations.

Figures 2a, 2b, 3a, 3b show a basic mold element 3 and a basic counter-mold element 4, for the injection molding of thermoplastic materials such as polystyrene, polypropylene, ABS. The material, injected in a known manner, reaches the molding cavity through the central injection channel 23 and therefrom through secondary injection channels, non visible directly, included in the modular inserts, it propagates to the molding cavity, obtained, in the case in point, by the coupling of the modular inserts that defines the part to be molded 1.

The molding process for a TV frame, a monitor frame or a display frame, comprises the following steps:
- preparation of the mold, i.e., insertion and locking of the modular inserts that allow to define the desired shape or size of the part to be molded;
- closing of the basic mold element with the basic counter-mold element;
- injection of the material;
- mold opening on prior cooling.

Now, upon removal of the part, the mold is ready to restart the molding process and to realize a product identical to the previous one, or, upon replacement of one or more modular inserts, to realize a part having a size and/or a shape other than the prior one. In other words, utilising the same basic mold and counter-mold elements 3 and 4 respectively, by simply changing the modular inserts, it is possible to produce, for instance, supporting frames for 19" or 21" screens, or, always changing the modular inserts, it is possible to modify the aesthetic lines of the product, as shown in Figures 3a, 3b, or the arrangement of some components, such as for instance the hole set that will house the push-button panel.

In the present description a molding method for the front frame of a TV set has been illustrated, but it would be possible to realize, in the same manner and always according to the present invention, the rear frame, variable as to the shape and size, of the TV set.

## Claims

1. A mold (2) for cabinet frames (1) of TV sets, monitors and displays comprising at least a basic mold element (3) and at least a basic counter-mold element (4) that define a cavity (5), one or more at least partly shaped removeable modular inserts (6-8, 6'-7', 33, 35, 38-41, 39'-41') that fill up said cavity (5), to define in a variable manner the shape and/or size of the part to be molded, **characterized in that** at least one of said modular inserts comprises one or more injection channels for injecting a material into said cavity (5).

2. The mold according to claim 1, **characterized in that** it ensues from the association between said basic mold element (3), said basic counter-mold element (4) and one or more modular inserts (6-8, 6'-7', 33, 35, 38-41, 39'-41') of the mold (2).

3. A mold according to claim 1, **characterized in that** said modular inserts (6-8, 6'-7', 33, 35, 38-41, 39'-41') comprise at least a shaped portion (9, 10, 31-32, 34, 36, 42-46) reproducing in the negative at least a portion (12-14) of the part (1) to be molded, and **in that** one or more of said modular inserts (6-8, 6'-7', 33, 35, 38-41, 39'-41') can define the part to be molded entirely.

4. A mold according to claim 1, **characterized in that** said modular inserts inserts (6-8, 6'-7', 33, 35, 38-41, 39'-41') comprise portions (16-18) for coupling with corresponding portions of the basic mold element (3) and/or the basic counter-mold element (4) and/or the remaining modular inserts.

5. A mold according to claim 1, **characterized in that** said modular inserts (6-8, 6'-7', 33, 35, 38-41, 39'-41') comprise fasteners (20) for the fastening to each other and/or to the basic mold element (3) and/or the basic counter-mold element (4).

6. A mold according to claim 1, **characterized in that** said modular inserts (6-8, 6'-7', 33, 35, 38-41, 39'-41') comprise fasteners (20) for the individual fastening with the basic mold element (3) or the basic counter-mold element (4).

7. A mold according to claim 1, **characterized in that** it comprises an auxillary the moveable element (50) that can be movably fastened to the mold basic element (3) or to the counter-mold basic element (4), the auxiliary removeable element (50) having a countersunk profile for allowing, with an open mold and upon removal therefrom, an easy insertion or removal of the frame (1) or the modular inserts (6-8, 6'-7', 33, 35, 38-41, 39'-41') therefrom.

8. A molding process for cabinet frames (1) of TV sets, monitors and or displays, **characterized in that** it comprises the following steps:
a) preparation of a modular mold (2) according to claim 1;
b) closing of the mold (2);
c) injection of the material to be molded;
d) cooling of the part (1);
e) opening of the mold (2);
f) repetition of the process beginning from step a) or b).

9. A molding process according to claim 8, **characterized in that** the preparation step of the modular mold (2) comprises the following steps;
a) opening of the mold (2);
b) positioning of one or more of said modular inserts (6-8, 6'-7', 33, 35, 38-41, 39'-41') so as to fill up said cavity (5);
c) fastening said modular inserts (6-8, 6'-7', 33, 35, 38-41, 39'-41') to the basic mold element (3) and the basic counter-mold elements (4).

10. A molding process according to claim 9, **characterized in that** the preparation step of the modular mold comprises a step of removal of the modular inserts (6-8, 6'-7', 33, 35, 38-41, 39'-41') previously inserted after step a).

## Patentansprüche

1. Formwerkzeug (2) für Gehäuserahmen (1) von TV-Geräten, Monitoren und Displays, umfassend wenigstens ein Grundformelement (3) und wenigstens ein Grundgegenformelement (4), die einen Hohlraum (5) definieren, einen oder mehrere wenigstes teilweise geformte, herausnehmbare modulare Einsätze (6 - 8, 6' - 7', 33, 35, 38 - 41, 39' - 41'), die diesen Hohlraum (5) ausfüllen, so dass Form und/oder Größe des zu formenden Teils variabel definiert sind, **dadurch gekennzeichnet, dass** wenigstens einer der modularen Einsätze einen oder mehrere Einspritzkanäle zum Einspritzen von Material in den Hohlraum (5) aufweist.

2. Formwerkzeug nach Anspruch 1, **dadurch gekennzeichnet, dass** es sich aus dem Verbund zwischen dem Grundformelement (3), dem Grundgegenformelement (4) und einem oder mehreren modularen Einsätzen (6 - 8, 6' - 7', 33, 35, 38 - 41, 39' - 41') des Formwerkzeugs (2) ergibt.

3. Formwerkzeug nach Anspruch 1, **dadurch gekennzeichnet, dass** die modularen Einsätze (6 - 8, 6' - 7', 33, 35, 38-41, 39' - 41') wenigstens einen geformten Teilbereich (9, 10, 31 - 32, 34, 36, 42 - 46) umfassen, der im Negativ wenigstens einen Teilbereich (12 - 14) des zu formenden Teils (1) nachbildet, und dass ein oder mehrere der modularen Einsätze (6 - 8, 6' - 7', 33, 35, 38 - 41, 39' - 41') das im Ganzen zu formende Teil definieren können.

4. Formwerkzeug nach Anspruch 1, **dadurch gekennzeichnet, dass** die modularen Einsätze (6 - 8, 6'- 7', 33, 35, 38 - 41, 39'- 41') Teilbereiche (16 - 18) zur Verbindung mit den entsprechenden Teilbereichen des Grundformelements (3) und/oder des Grundgegenformelements (4) und/oder der verbleibenden modularen Einsätze umfassen.

5. Formwerkzeug nach Anspruch 1, **dadurch gekennzeichnet, dass** die modularen Einsätze (6 - 8, 6' - 7', 33, 35, 38 - 41, 39' - 41') Befestigungsmittel (20) zur Befestigung aneinander und/oder am Grundformelement (3) und/oder am Grundgegenformelement (4) umfassen.

6. Formwerkzeug nach Anspruch 1, **dadurch gekennzeichnet, dass** die modularen Einsätze (6 - 8, 6' - 7', 33, 35, 38 - 41, 39'- 41') Befestigungsmittel (20) zur individuellen Befestigung mit dem Grundformelement (3) oder dem Grundgegenformelement (4) umfassen.

7. Formwerkzeug nach Anspruch 1, **dadurch gekennzeichnet, dass** es ein herausnehmbares Zusatzelement (50) umfasst, das beweglich am Grundformelement (3) oder am Grundgegenformelement (4) befestigt werden kann, wobei das herausnehmbare Zusatzelement (50) ein Senkprofil aufweist, so dass es bei offenem Formwerkzeug und nach Herausnahme aus demselben möglich ist, den Rahmen (1) oder die modularen Einsätze (6 - 8, 6' - 7', 33, 35, 38 - 41, 39' - 41') problemlos einzusetzen oder herauszunehmen.

8. Formverfahren für Gehäuserahmen (1) von TV-Geräten, Monitoren und/oder Displays, **dadurch gekennzeichnet, dass** es die folgenden Schritte umfasst:
a) Herstellung des modularen Formwerkzeugs (2) nach Anspruch 1;
b) Schließen des Formwerkzeugs (2);
c) Einspritzen des zu formenden Materials;
d) Kühlen des Teils (1);
e) Öffnen des Formwerkzeugs (2);
f) Wiederholen des Vorgangs beginnend bei Schritt a) oder b).

9. Formverfahren nach Anspruch 8, **dadurch gekennzeichnet, dass** der Schritt der Herstellung des modularen Formwerkzeugs (2) die folgenden Schritte umfasst:
a) Öffnen des Formwerkzeugs (2);
b) Positionieren eines oder mehrerer der modularen Einsätze (6 - 8, 6' - 7', 33, 35, 38 - 41, 39' - 41'), um so den Hohlraum (5) auszufüllen;
c) Befestigen der modularen Einsätze (6 - 8, 6'- 7', 33, 35, 38 - 41, 39' - 41') am Grundformelement (3) und am Grundgegenformelement (4).

10. Formverfahren nach Anspruch 9, **dadurch gekennzeichnet, dass** der Schritt der Herstellung des modularen Formwerkzeugs einen Schritt der Herausnahme der zuvor nach Schritt a) eingesetzten modularen Einsätze (6 - 8, 6' - 7', 33, 35, 38 - 41, 39'- 41') umfasst.

## Revendications

1. Moule (2) pour châssis de caisse (1) de téléviseurs, de moniteurs et d'écrans comprenant au moins un élément de moule de base (3) et au moins un élément de contre-moule de base (4) qui définissent une cavité (5), un ou plusieurs inserts modulaires amovibles formés au moins partiellement (6-8, 6'-7', 33, 35, 38-41, 39'-41') qui remplissent ladite cavité (5), pour définir d'une manière variable la forme et/ou la taille de la pièce à mouler, **caractérisé en ce qu'**au moins l'un desdits inserts modulaires comprend un ou plusieurs canaux d'injection pour injecter une matière dans ladite cavité (5).

2. Moule selon la revendication 1, **caractérisé en ce qu'**il résulte de l'association entre ledit élément de moule de base (3), ledit élément de contre-moule de base (4) et de l'un ou de plusieurs inserts modulaires (6-8, 6'-7', 33, 35, 38-41, 39'-41') du moule (2).

3. Moule selon la revendication 1, **caractérisé en ce que** lesdits inserts modulaires (6-8, 6'-7', 33, 35, 38-41, 39'-41') comprennent au moins une partie formée (9, 10, 31-32, 34, 36, 42-46) reproduisant en négatif au moins une partie (12-14) de la partie (1) à mouler, et **en ce qu'**un ou plusieurs desdits inserts modulaires (6-8, 6'-7', 33, 35, 38-41, 39'-41') peuvent définir la partie à mouler complètement.

4. Moule selon la revendication 1, **caractérisé en ce que** lesdits inserts modulaires (6-8, 6'-7', 33, 35, 38-41, 39'-41') comprennent des parties (16-18) pour le couplage avec des parties correspondantes de l'élément de moule de base (3) et/ou l'élément de contre-moule de base (4) et/ou les inserts modulaires restants.

5. Moule selon la revendication 1, **caractérisé en ce que** lesdits inserts modulaires (6-8, 6'-7', 33, 35, 38-41, 39'-41') comprennent des fixations (20) pour la fixation entre elles et/ou à l'élément de moule de base (3) et/ou à l'élément de contre-moule de base (4).

6. Moule selon la revendication 1, **caractérisé en ce que** lesdits inserts modulaires (6-8, 6'-7', 33, 35, 38-41, 39'-41') comprennent des fixations (20) pour la fixation individuelle avec l'élément de moule de base (3) ou l'élément de contre-moule de base (4).

7. Moule selon la revendication 1, **caractérisé en ce qu'**il comprend un élément mobile auxiliaire (50) qui peut être fixé de manière mobile à l'élément de moule de base (3) ou à l'élément de contre-moule de base (4), l'élément mobile auxiliaire (50) ayant un profil fraisé pour permettre, avec un moule ouvert et suite au retrait de celui-ci, une insertion ou un retrait facile du châssis (1) ou des inserts modulaires (6-8, 6'-7', 33, 35, 38-41, 39'-41') de celui-ci.

8. Procédé de moulage pour châssis de caisse (1) de téléviseurs, de moniteurs et/ou d'écrans, **caractérisé en ce qu'**il comprend les étapes suivantes :
a) préparation d'un moule modulaire (2) selon la revendication 1 ;
b) fermeture du moule (2) ;
c) injection du matériau à mouler ;
d) refroidissement de la pièce (1) ;
e) ouverture du moule (2) ;
f) répétition du procédé en commençant par l'étape a) ou b).

9. Procédé de moulage selon la revendication 8, **caractérisé en ce que** l'étape de préparation du moule modulaire (2) comprend les étapes suivantes :
a) ouverture du moule (2) ;
b) positionnement d'un ou de plusieurs desdits inserts modulaires (6-8, 6'-7', 33, 35, 38-41, 39'-41') afin de remplir ladite cavité (5) ;
c) fixation desdits inserts modulaires (6-8, 6'-7', 33, 35, 38-41, 39'-41') à l'élément de moule de base (3) et à l'élément de contre-moule de base (4).

10. Procédé de moulage selon la revendication 9, **caractérisé en ce que** l'étape de préparation du moule modulaire comprend une étape de retrait des inserts modulaires (6-8, 6'-7', 33, 35, 38-41, 39'-41') préalablement insérés après l'étape a).
